Europäisches Patentamt

European Patent Office

Office européen des brevets

(11) Publication number: **0 117 835**
A2

# (12) EUROPEAN PATENT APPLICATION

(21) Application number: 84630026.7

(22) Date of filing: 17.02.84

(51) Int. Cl.³: **B 60 C 15/00**

(30) Priority: 28.02.83 US 470838

(43) Date of publication of application: 05.09.84
Bulletin 84/36

(84) Designated Contracting States: DE FR GB IT LU

(71) Applicant: **THE GOODYEAR TIRE & RUBBER COMPANY**, 1144 East Market Street, Akron, Ohio 44316 (US)

(72) Inventor: **Welter, Thomas Nicolas Hubert, 65, Rue de Kehlen, Keispelt (LU)**

(74) Representative: **Weyland, Joseph Jean Pierre, Goodyear International Tire Technical Center Patent Department Avenue Gordon Smith, L-7750 Colmar-Berg (LU)**

(54) High compression beads for tires.

(57) A tubeless pneumatic tire (10) is mountable upon a standard rim and has improved roll-off characteristics in the event the tire is operated at a pressure lower than the design inflation pressure. The tire has a rim interference in the range of 0.4 to 0.6, a conical surface (36) connecting the radially inner surface (28) and axially outer surface (32) of each bead portion, and a sealing lip (38) extending axially and radially inwardly from the radially inner surface of the bead portion.

# HIGH COMPRESSION BEADS FOR TIRES

## Background of the Invention

The present invention is concerned with beads for tubeless pneumatic tires, and more specifically with tire beads which when mounted upon a rim have a reduced probability of becoming unseated if the tire is operated at an inflation pressure lower than the design inflation pressure.

The use of tubeless pneumatic tires is well known in the art. A tubeless tire is retained on a rim by internal inflation pressure pushing the beads of the tire against the flanges of the rim and the beads of the tire forming an airtight seal with the rim. If, for any reason, the internal inflation pressure falls below the design inflation pressure, the force that maintains the beads against the flanges is reduced. When lateral forces are then applied to the tire and rim assembly during vehicle operation, for example during cornering, the tire beads could possibly be dislodged resulting in the airtight seal being broken. This dislodging results from a force being transmitted through the carcass-reinforcing cords of the tire and pulling radially outwardly on a bead core, therefore increasing the radial distance between the bead core and the rim.

Many attempts have been made in the prior art to provide tire and rim assemblies which keep the tire beads in place in the event that internal inflation pressure is partially lost. Such assemblies usually rely upon bead spacer rings or similar devices, or they may employ some form of interlocking of the tire with a specially designed rim. The use of special rims or spacers makes the adaption of such devices to existing vehicles costly and difficult. However, the present invention provides a tubeless pneumatic tire which may be mounted upon a rim that is provided with a vehicle by the vehicle manufacturer as standard equipment.

There is provided in accordance with the invention a tubeless pneumatic tire that is mountable upon a rim having a pair of conical bead seats separated by a well, with a flange extending radially outwardly from an axially outer end of each bead seat. The bead seats have a predetermined sharp diameter. The tire comprises: (a) a tread extending circumferentially about the axis of rotation of the tire; (b) a pair of sidewalls extending radially inwardly from said tread, each sidewall having a reinforcing ply therein; and (c) a pair of bead portions, one of said bead portions being located at a radially inner end of each sidewall, each bead portion comprising an annular bead core with a reinforcing ply anchored thereabout and having radially inner and axially outer surfaces defined by an elastomeric material overlying said bead core and reinforcing ply, said radially inner surface and said bead core having sharp diameters such that a rim interference in the range of 0.4 to 0.6 results when the tire is mounted upon said rim, said radially inner surface being connected to said axially outer surface by a conical connecting surface, and a sealing lip of elastomeric material extending axially and radially inwardly from said radially inner surface.

## Brief Description of the Drawing

An understanding of additional aspects of the invention can be gained from a consideration of the following detailed description of a representative embodiment thereof, in conjunction with the appended figures of the drawing, wherein:

Fig. 1 is a graph showing bead compression as a function of lateral acceleration;

Fig. 2 is a radial cross-sectional view of a tire according to the invention;

Fig. 3 is an enlarged view of a bead portion of the tire shown in Fig. 2;

Fig. 4 is a radial cross-sectional view of the tire shown in Fig. 2 mounted on a rim; and

Fig. 5 is a radial cross-sectional view of the tire and rim shown in Fig. 4 when subjected to lateral acceleration.

Detailed Description of the Invention

Roll-off is a displacement of the bead of a tire that occurs when the lateral forces acting upon a tire bead exceed the forces of bead compression and inflation pressure acting to retain the bead in position with respect to the rim. Forces that occur when operating a vehicle that the tire and rim are mounted upon pull and stress the tire beads to reduce the amount of bead compression at any point on the bead, on a cyclical basis as the tire and rim rotate, due to the radially outward pulling forces exerted on the bead core by the carcass-reinforcing ply. This expansion of the radius of the bead core reduces the amount of compression of the elastomeric material located between the bead core and the bead seat of the rim.

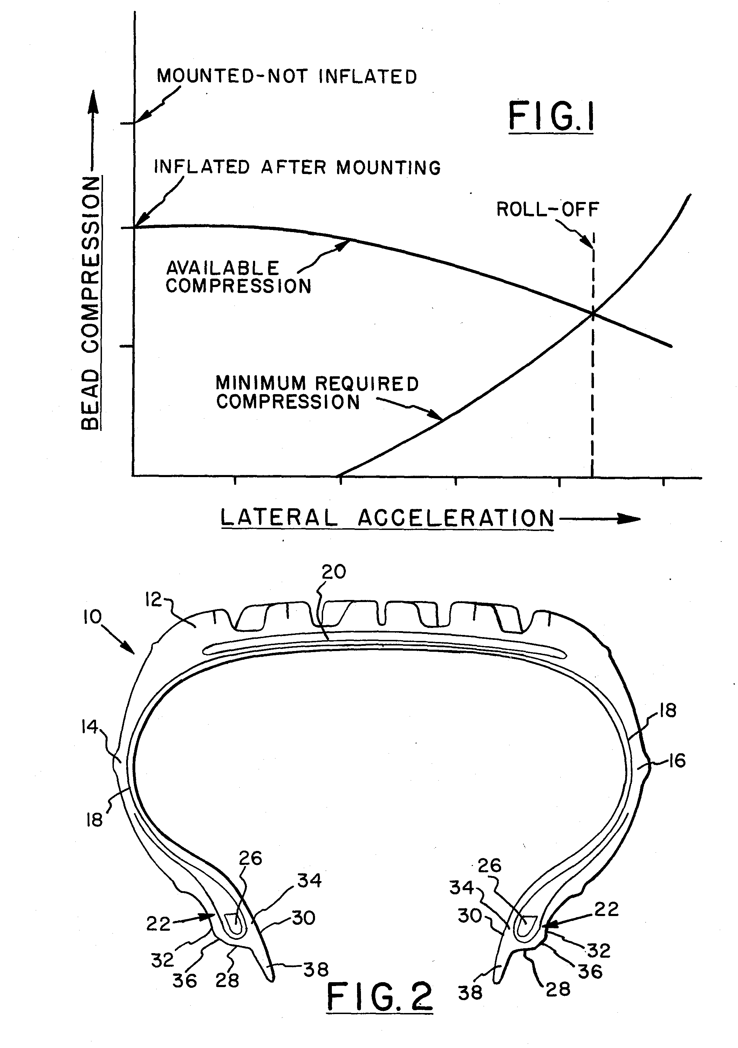

Referring to Fig. 1, there is shown a graph illustrating the relationship of bead compression to lateral acceleration. The maximum compression of the beads occurs when the tire is mounted upon the rim but not inflated. When the tire is inflated, the reinforcing ply anchored around the bead core is in tension, and exerts a radially outward pull on the bead core which reduces the compression of the elastomeric material located between the bead core and the bead seat of the rim. The curve on the graph that is labeled "AVAILABLE COMPRESSION" therefor indicates the amount of effective compression between the tire bead and rim determined by the interference fit between the rim and bead and the pull on the bead core due to driving forces. The curve on the graph labeled "MINIMUM REQUIRED COMPRESSION" indicates the minimum amount of compression required to maintain the tire beads in position on a rim as the lateral acceleration due to driving forces increases. When the "AVAILABLE COMPRESSSION" curve intersects the "MINIMUM REQUIRED COMPRESSION" curve, the roll-off phenomena may occur. Tires manufactured in accordance with the present invention have an increased compression ratio due to increased rim interference, and also have sealing lips on the axially inner side of the beads to reduce air leaks between tires and rims if the compression of the tire beads is decreased below the "Minimum Required Compression".

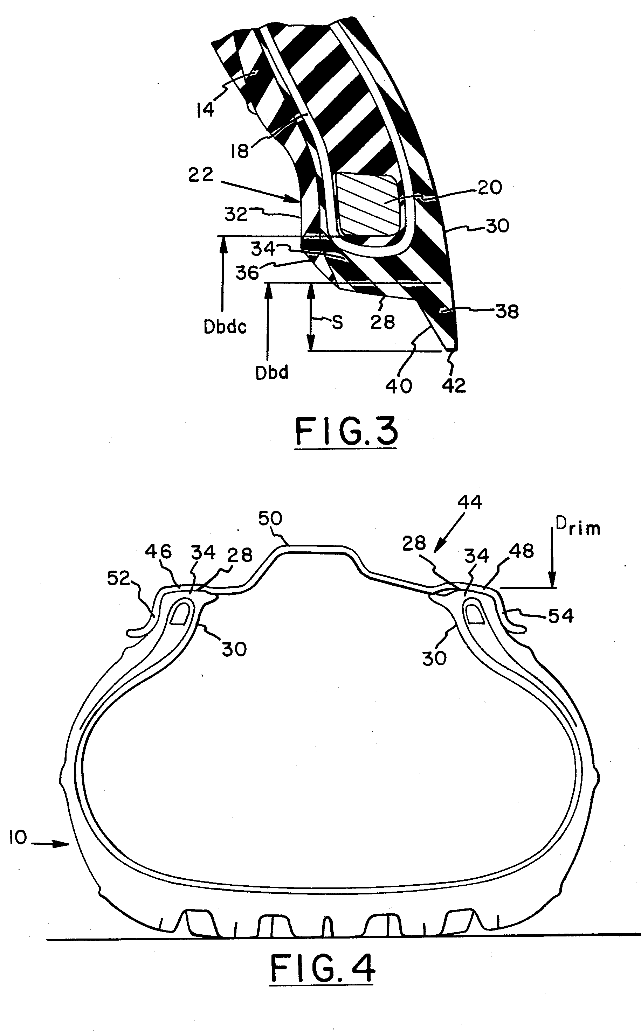

Fig. 2 is a radial cross-sectional view of a tire made in accordance with the invention and Fig. 3 is an enlarged view of a bead portion of the tire shown in Fig. 2. A tubeless pneumatic tire 10 manufactured in accordance with the invention has a tread 12 extending circumferentially about the axis of rotation of the tire. A pair of sidewalls 14,16 extend radially inwardly from the tread, and each sidewall has a reinforcing ply 18 therein. As used herein, "axial" and "axially" refer to directions parallel to the axis of rotation of a tire or tire and rim assembly and "radial" and "radially" refer to directions that are perpendicular to the axis of rotation of a tire or tire and rim assembly.

It is understood that the same reinforcing ply may extend from one sidewall to the other, or the tire may be of the split carcass variety in which each sidewall contains a separate reinforcing ply that does not extend to the opposite sidewall. The reinforcing ply or plies may be either of the radial or bias varieties, both of which are well known in the tire technology. A tread reinforcement structure 20 of one or more plies of reinforcing material may be located radially inwardly of the tread. The tire has a pair of bead portions, one of the bead portions 22 being located at a radially inner end of each sidewall. Each bead portion 22 comprises an annular bead core 26 with a reinforcing ply 18 anchored thereabout, and has radially inner 28 and axially inner 30 and outer 32 surfaces defined by an elastomeric material 34 overlying the bead core and reinforcing ply.

The radially inner and axially outer surface of a bead portion of a tire according to the invention are not connected to one another by a convex radius as in most prior art tires, but are instead connected to one another by a conical connecting surface 36. The conical connecting surface 36 is tapered axially and radially outwardly from the radially inner surface 28 of the bead portion, preferably at an angle of 45 degrees with respect to the axis of rotation of the tire. It is preferred that a radially extending plane containing the intersection of the conical connecting surface and the radially inner surface of the bead portion should not be located axially inwardly of a radially extending plane that contains the axially outermost extent of the bead core 26 in the bead portion.

Another feature of the bead portions 22 of a tire 10 manufactured in accordance with the invention is a sealing lip 38 of elastomeric material extending axially and radially inwardly from the radially inner surface 28 of each bead portion of the tire. The axially outer surface 40 of the sealing lip is inclined at an angle of between 40 and 60 degrees with respect to the axis of rotation of the tire. For example, in a 155 SR-13 tire, the axially outer surface of the sealing lip may be inclined at an angle of 48 degrees with respect to the axis of rotation of the tire.

The seal length $\underline{S}$ of the sealing lip is the radial distance from the sharp diameter Dbd of the bead portion to the radially inner end 42 of the sealing lip. The sharp diameter of the bead portions of a tire is defined by the intersection of the radially inner surface 28 of the bead portion and the axially outer surface 32 of the bead portion, as measured on a newly vulcanized tire. In a tire according to the invention, the sharp diameter of the bead portion is determined by projecting these surfaces, due to the conical connecting surface. The seal length $\underline{S}$ is preferably equal to the maximum radial elongation of the bead during operation of the vehicle, and is the summation of the radial extension of the bead portion due to mounting, inflation, loading, and cornering, as determined by testing. If desired by the engineer, a factor may be added to the elongation determined by testing or other means to take into account any irregularities in the radially inner surface of the bead portion which may result from the tire manufacturing process. For example, it has been determined that in a 155 SR-13 tire manufactured in accordance with the invention, the sealing length should be 3.0 millimeters.

Another feature of the bead portions of a tire manufactured in accordance with the invention may be explained by referring to Fig. 4 in conjunction with Figs. 2 and 3. Fig. 4 is a radial cross-sectional view of the tubeless pneumatic tire shown in Fig. 2 mounted on a rim to make a tire and rim assembly.

A tubeless pneumatic tire 10 manufactured in accordance with the invention is mountable upon a rim 44 having a pair of conical bead seats 46,48 separated by a well 50, with a flange 52,54 extending radially outwardly from an axially outer end of each bead seat.

A rim 44 of the type illustrated in the tire and rim assembly in Fig. 4 is sometimes referred to as a "standard tubeless rim". As used herein, a "standard tubeless rim" is a rim that a tubeless tire of the same size as the tubeless tire according to the invention, for example, 155 SR-13, is designed to be mounted upon. Put another way, a 155 SR-13 tire manufactured in accordance with the present invention may be mounted upon the same rim that a prior art 155 SR-13 tire is designed to be mounted upon. Although the rim 44 shown in Fig. 4 is asymmetrical with respect to its centerline, it is understood that a tire according to the invention may be mounted upon a symmetrical rim also.

The bead seats 46,48 of the rim 44 have a predetermined sharp diameter. The radially inner surface and bead core of each bead portion have sharp diameters such that a rim interference in the range of 0.4 to 0.6 results when the tire is mounted upon the rim with the radially inner surfaces of the bead portions adjacent to the bead seats of the rim and the axially outer surfaces of the bead portions adjacent to the flanges of the rim.

"Rim interference" refers to an interference fit of the tire beads and the rim bead seats due to the tire beads having a smaller sharp diameter than the rim bead seats. The interference causes compression of the elastomeric material located between the bead core and the rim.

The sharp diameters used in calculating rim interference are measured at sharp points. The sharp points of a rim are defined by the intersection of the bead seat and the flange. For example, a 155 SR-13 tire is designed to be mounted upon a rim having a sharp diameter Drim of 329.4 millimeters. The sharp points on a tire's bead portions are defined by the intersection of the radially inner and axially outer surfaces of the bead portions, as measured on a newly vulcanized tire in the vulcanizing mold. Due to the conical connecting surface in a tire according to the invention, the radially inner and axially outer surfaces of the bead portions must be projected to determine their intersection at the sharp diameter. For example, a 155 SR-13 tire made in accordance with the invention may have bead portions with a sharp diameter Dbd of 326.4 millimeters, while a prior art 155 SR-13 tire would typically have beads with a sharp diameter Dbd of about 327.3 millimeters. The sharp diameter Dbdc of a bead core is the diameter of a cylinder which is parallel to the axis of rotation of the tire and which is tangent to the radially innermost edge of the bead core. For example, a 155 SR-13 tire made in accordance with the invention may have bead cores with a sharp diameter Dbdc of 332.3 millimeters, while a prior art 155 SR-13 tire would typically have bead cores with a sharp diameter Dbdc of about 333.7 millimeters.

Rim interference RI is calculated using the formula:

$$RI = \frac{Drim - Dbd}{Dbdc - Dbd}$$

with Drim being the sharp diameter of the rim;

Dbd being the sharp diameter of the bead portion; and

Dbdc being the sharp diameter of the bead core.

By using this formula, the rim interference of a 155 SR-13 tire made in accordance with the invention per the above example has a rim interference of .51, while a 155 SR-13 tire of the prior art per the above example has a rim interference of .33. While making allowance for deviations in the exact sharp diameters selected by a tire designer, it is preferable that the bead of a tire made in accordance with this invention have a rim interference of between 0.4 and 0.6 when mounted upon a rim that it is designed to be used with.

Referring again to Figs 3 and 4, a portion of the elastomeric material 34 that is located between the bead cores and the radially inner surface of the bead portions in an unmounted tire is displaced due to the rim interference when the tire is mounted on a rim. The displacement of the elastomeric material causes the conical surface 36 connecting the radially inner 28 and axially outer 32 surfaces of the bead portions to be deformed, and the elastomeric material fills the annular void that would otherwise exist between the bead portion and the rim. Most preferably, in a tire made in accordance with the invention, the volume of an annular body defined by: (a) the conical connecting surface 36; (b) a projected extension of the radially inner surface 28 of the bead portion; and (c) a projected extension of the axially outer surface 32 of the bead portion, is one-half of the volume of the elastomeric material displaced by the interference of the bead portion with the bead seat of the rim when the tire is mounted upon the rim. While it is not believed that this particular relationship is essential to practicing the invention, it is expected that if this relationship is fulfilled, the other half of the elastomeric material displaced by the rim interference will be displaced axially inwardly toward the cavity of the tire.

In a tire and rim assembly made in accordance with the invention, the sealing lip 38 of elastomeric material extends axially inwardly from the axially inner 30 and radially inner 28 surfaces of the bead portions, so that the axially outer surface 40 of the sealing lip is in contact with the rim. Due to the asymmetry of the rim 44 shown in Fig. 4, the sealing lips fit against the rim differently on each side of the tire.

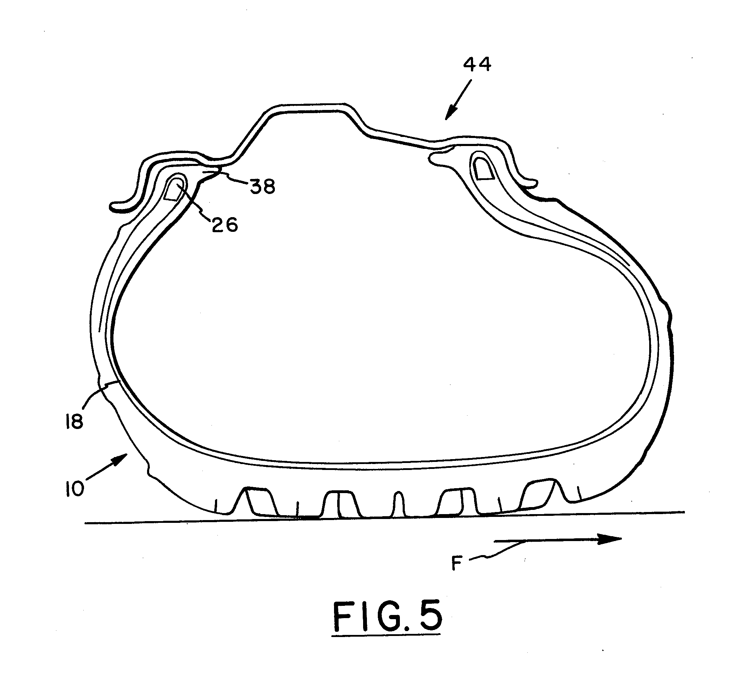

Referring next to Fig. 5, there is shown a radial cross-sectional view of the tire and rim assembly of Fig. 4 being subjected to a lateral stress F such as that experienced when a vehicle the assembly is mounted on goes around a corner in the direction indicated by the arrow. The cornering forces produce an added tension on the bead core in the bead portion that is on the side of the assembly away from the direction the vehicle is turning. This added tension is transmitted through the reinforcing ply 18 and pulls the bead core 26 radially outwardly, thereby reducing the compression of the elastomeric material in the bead portion. The sealing lip 38 maintains an airtight seal to reduce the probability of a reduction

0117835

in inflation pressure that could result in the roll-off phenomena.

WHAT IS CLAIMED IS:

1. A tubeless pneumatic tire that is mountable upon a rim having a pair of conical bead seats separated by a well with a flange extending radially outwardly from an axially outer end of each bead seat, said bead seats having a predetermined sharp diameter, said tire characterized by:

(a) a tread extending circumferentially about the axis of rotation of said tire;

(b) a pair of sidewalls extending radially inwardly from said tread, each sidewall having a reinforcing ply therein; and

(c) a pair of bead portions, one of said bead portions being located at a radially inner end of each said sidewall, each bead portion comprising an annular bead core with a reinforcing ply anchored thereabout and having radially inner and axially outer surfaces defined by an elastomeric material overlying said bead core and reinforcing ply, said radially inner surface and said bead core having sharp diameters such that a rim interference in the range of 0.4 to 0.6 results when the tire is mounted upon said rim, said radially inner surface being connected to said axially outer surface by a conical connecting surface, and a sealing lip of elastomeric material extending axially and radially inwardly from said radially inner surface.

2. A tire according to Claim 1, further characterized in that said conical connecting surface is inclined axially and radially outwardly at an angle of 45 degrees, with respect to the axis of rotation of said tire.

3.  A tire according to Claim 1, further characterized in that an axially outer surface of said sealing lip is inclined axially and radially inwardly from the radially inner surface of said bead portion at an angle of between 40 to 60 degrees with respect to the axis of rotation of said tire.

4.  A tire and rim assembly comprising:

(a) a rim having a pair of conical bead seats separated by a well with a flange extending radially outwardly from an axially outer end of each bead seat, said bead seats having a predetermined sharp diameter; and

(b) a tubeless pneumatic tire mounted upon said rim, said tire characterized by:

(i) a tread extending circumferentially about the axis of rotation of said assembly;

(ii) a pair of sidewalls extending radially inwardly from said tread, each sidewall having a reinforcing ply therein; and

(iii) a pair of bead portions, one of said bead portions being located at a radially inner end of each sidewall, each bead portion comprising an annular bead core with a reinforcing ply anchored thereabout and having radially inner and axially inner and outer surfaces defined by elastomeric material overlying said bead core and reinforcing ply, the radially inner surface and bead core of each bead portion having sharp diameters such that a rim interference in the range of 0.4 to 0.6 results when the tire is mounted upon said rim with the radially inner surfaces of the bead portions adjacent to the bead seats of the rim and axially outer surfaces of the bead portions adjacent to the flanges of the rim, a portion of said elastomeric material being displaced due to said rim interference and causing a conical surface connecting said radially inner and axially outer surfaces of the bead portion to be deformed, and a sealing lip of elastomeric material extending axially inwardly from the axially inner and radially inner surfaces of said bead portion.

0117835

## FIG.1

MOUNTED-NOT INFLATED

INFLATED AFTER MOUNTING

ROLL-OFF

AVAILABLE
COMPRESSION

MINIMUM REQUIRED
COMPRESSION

BEAD COMPRESSION

LATERAL ACCELERATION

## FIG.2

0117835

FIG.3

FIG.4

0117835

FIG.5